# EUROPEAN PATENT SPECIFICATION

(11) **EP 1 118 499 B1**
(45) Date of publication and mention of the grant of the patent: **03.06.2009**
(21) Application number: 01650007.6
(22) Date of filing: 17.01.2001
(51) Int. Cl.: B60P 1/00, B60P 3/14, B60P 3/24

(54) **A delivery vehicle**
Lieferwagen
Véhicule de livraison

(30) Priority: 18.01.2000 IE 20000039
(43) Date of publication of application: 25.07.2001
(73) Proprietor: Reynolds, Joseph, Dublin 1 (IE)
(72) Inventor: Reynolds, Joseph, Dublin 1 (IE)
(74) Representative: Moore, Barry

(56) References cited:
- CH-A- 543 430
- CH-A- 548 326
- DE-A- 4 014 060
- DE-U- 1 925 098
- US-A- 2 498 229
- US-A- 5 349 980
- US-A- 5 893 398

## Description

The present invention relates to a delivery vehicle and more particularly to a delivery vehicle for use in the distribution of bulk liquids.

A variety of such vehicles are known for delivering the wide variety of lubrication and heating oils. These vehicles or tankers are loaded at a central depot and driven to a customer's site where the oil is pumped into a holding tank.

There are many problems associated with such deliveries. For example, a customer is unlikely to require an entire tanker load of a particular oil at any given time. This is particularly true in respect of domestic home heating oil. These deliveries typically will not exceed fifteen hundred litres. To overcome this the distributor seeks to analyse the delivery logistics to link a number of deliveries along a given route to optimize storage capacity usage and time.

A further problem arises from the variety of oils in common use. Even in domestic heating systems the product to be delivered is equally likely to be kerosene as oil. Obviously, the distributor cannot afford to have many vehicles on the road with intersecting delivery routes as this would increase costs and increase delivery times beyond acceptable levels. To overcome this problem tankers have been developed with a number of internally isolated compartments. Different oils are loaded into these compartments and as a result a single vehicle is capable of delivering a number of different oils along a given delivery route. While this represents a significant improvement over the previous tankers the number and size of compartments limit its effective use. Vehicles of this type characteristically have six, eight or ten compartments, however, there are many more than ten varieties of oil. Indeed, the range of applications for which such oils are used means that there are now many hundreds of oil grades. The volumes of the individual compartments and the limited number of such compartments often leads to wholesale inefficiencies in tanker operation. If a given customer orders one thousand litres of a relatively rare oil for use in a particular production process the vehicle will have to leave the distribution depot with the unused capacity of that compartment unused. The problem is exacerbated when a second delivery vehicle must be dispatched to the same geographic area to make further deliveries where the order volumes are less that the unused capacity. This increases delivery costs and ultimately the price charged to the consumer.

German patent publication number DE-U-1 925 098 discloses a vehicle for the distribution of bulk liquids according to the preamble of claim 1.

German patent publication number DE-A-40 14 060 discloses a container for the operational maintenance of machines as an attachment for a vehicle having a carrier frame for exchangeable containers with inlet and outlet openings and emptying pipes. All the containers, whose pipes and valves are covered by protective metal sheets, are also provided with drip trays with gratings.

US Patent Number US2,498,229 discloses a portable mounting station mounted on a vehicle for dispensing various products such as lubricants.

There is therefore a need for a vehicle, which will overcome the aforementioned problems.

According to the invention, as set out in the appended claim 1, there is provided a vehicle for the distribution of bulk liquids wherein the vehicle has means for releaseably engaging a plurality of storage compartments.

According to the invention, intermediate bulk carriers (IBC) provide the storage compartments. Conveniently, it is thus ensured that before departing from the depot the vehicle is carrying the optimum delivery load. This is obtained by ensuring that there is no unnecessary waste of space. Customer requirements for a small volume of infrequently ordered oil does not result in a reduced capacity as a small IBC appropriate to the order can be loaded and unused capacity can house another IBC containing another oil. This IBC in turn can house another specialist oil or be used to supplement more traditional oil capacity.

According to the invention there is provided an evacuation system for pumping contents of a container on the vehicle for delivery to an outlet pump, the system having alternately white oil tapping and coloured oil tapping points disposed along and about the vehicle. The arrangement of tapping points in this way allows an operative ease of access to a given IBC thus obviating the necessity to carry a multiplicity connection pipes and reducing potential for waste.

Ideally, the storage compartments are of varying volumes.

In one arrangement, the invention provides for the delivery of compartments to the vehicle using a forklift vehicle.

According to a preferred aspect of the invention, there is provided an oil recovery system comprising a sump tank and a delivery means for collecting spilled oil and delivering the oil to the sump tank.

In one arrangement, a longitudinal side channel on the vehicle connected to the sump provides the delivery means.

In a preferred arrangement the delivery means is provided by two longitudinal side channels carried on an exterior longitudinal surface of a trailer unit and having an interconnecting cross channel the channels being formed for directing retrieved spilled oil to delivery pipes connected to the sump.

In this way when a delivery hose is changed and a small amount of oil is lost or when flushed oil falls to the floor of the trailer it is directed along the channels to the delivery pipes and into the sump.

Preferably, the sump is dimensioned to have a greater volume than an IBC.

Thus, in the event of a catastrophic rupture of a single compartment or IBC the entire contents can be recovered from the sump. This limits both the cost of the loss and environmental damage.

In one embodiment of the invention the channels are angled toward the delivery pipe.

In one arrangement, the trailer is angled to direct spilled oil to a channel.

The use of an oil recovery system of this type represents both a safety enhancement for the public and for the operators of such vehicles. The use of this sump also allows salvaged oil to be returned to commercial use as the contents of the sump can be extracted at the depot and used as the lowest grade of lubrication oil According to a preferred aspect of the invention, there is provided a securing system for detachably mounting a container in position on a vehicle having a securing bar dimensioned to the container, the bar having at least one locking leg formed for engagement with a corresponding recess on the vehicle. In this way when an IBC is loaded onto the trailer the securing bar can be positioned to prevent movement of the IBC

Preferably, the bar is dimensioned for securing two IBC's on the vehicle.

The invention will now be described with reference to the accompanying drawings, which show, by way of example only, one embodiment of a vehicle in which: -
- Fig. 1: is a perspective view of a vehicle in accordance with the invention;
- Fig. 2: is a partial side view of the vehicle of Fig. 1;
- Fig. 3: is an end view of the vehicle illustrated in Figs. 1 and 2;
- Fig. 4: is a partial cross-sectional view of the end view of the vehicle shown in Fig. 5 in the direction if the arrows IV-IV showing an oil recovery system forming part of the invention;
- Fig. 5: is a plan view of vehicle as shown in Fig. 2 with the roof removed;

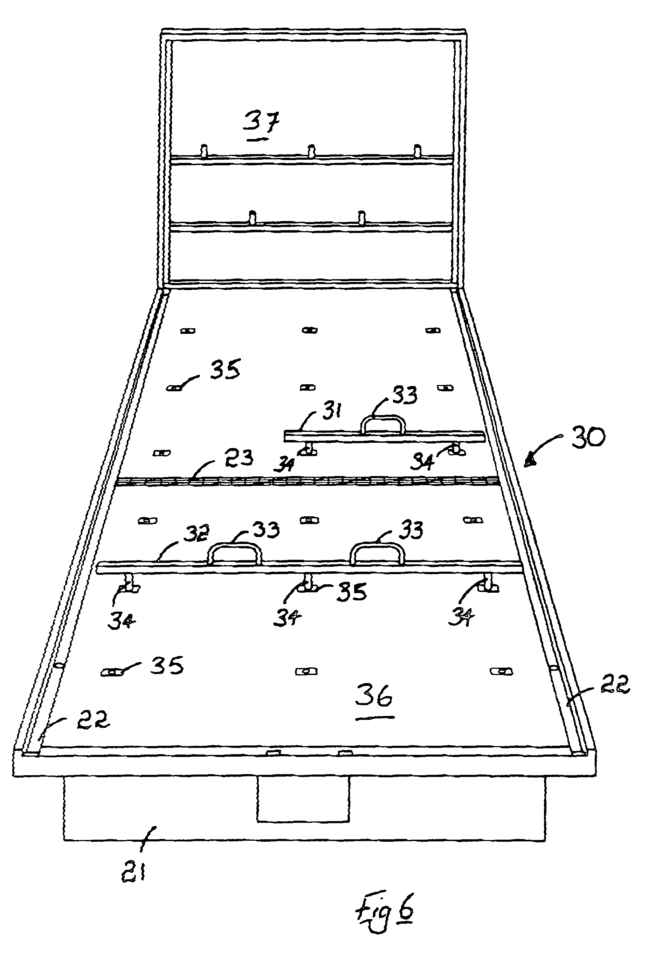

- Fig.6: is partial perspective view of the vehicle illustrating a securing system forming part of the invention; and
- Fig. 7: is a diagrammatic plan view of an evacuation system forming part of the invention.

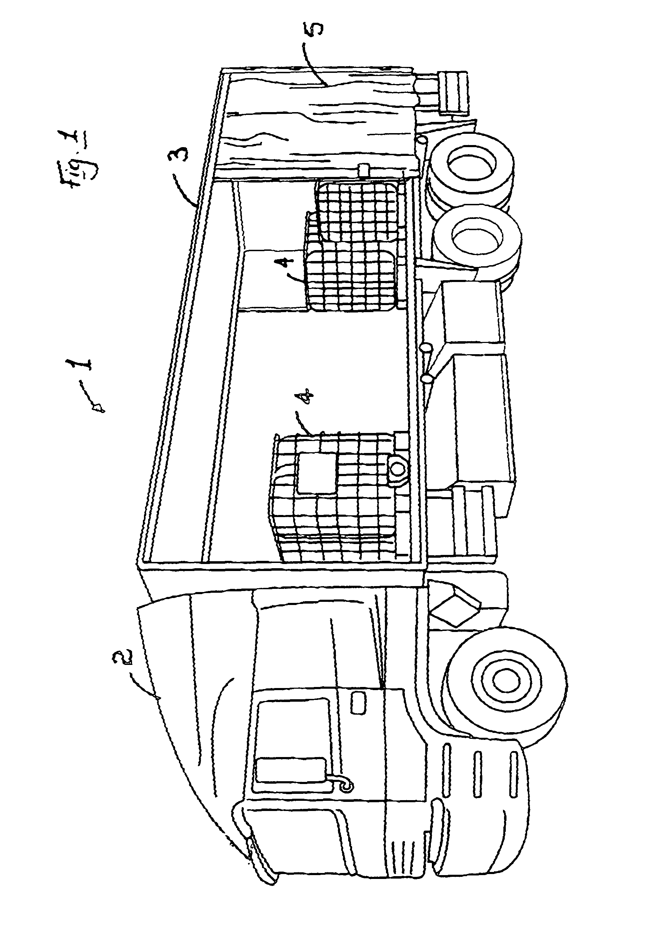

Referring to the drawings, and initially to Figure 1, there is shown a vehicle in accordance with the invention indicated generally by the reference numeral 1. The vehicle 1 has a tractor unit 2 and a trailer unit 3. The trailer unit 3 is adapted for releaseably engaging a plurality of storage compartments provided in this case by intermediate bulk carriers (IBC's) 4. The IBC's 4 may be of uniform volume or be varied to meet requirements. An important feature of this invention is that the IBC's may be readily loaded and unloaded using for example a forklift vehicle (not shown). In this way, it is ensured that prior to departure from the depot the vehicle 1 carries an optimum load. This optimum load ensures that there is negligible space wasted. Customer requirements for a small volume of infrequently ordered oil does not result in a reduced capacity load as a small IBC appropriate to the order can be loaded and unused capacity can house another IBC containing another oil.

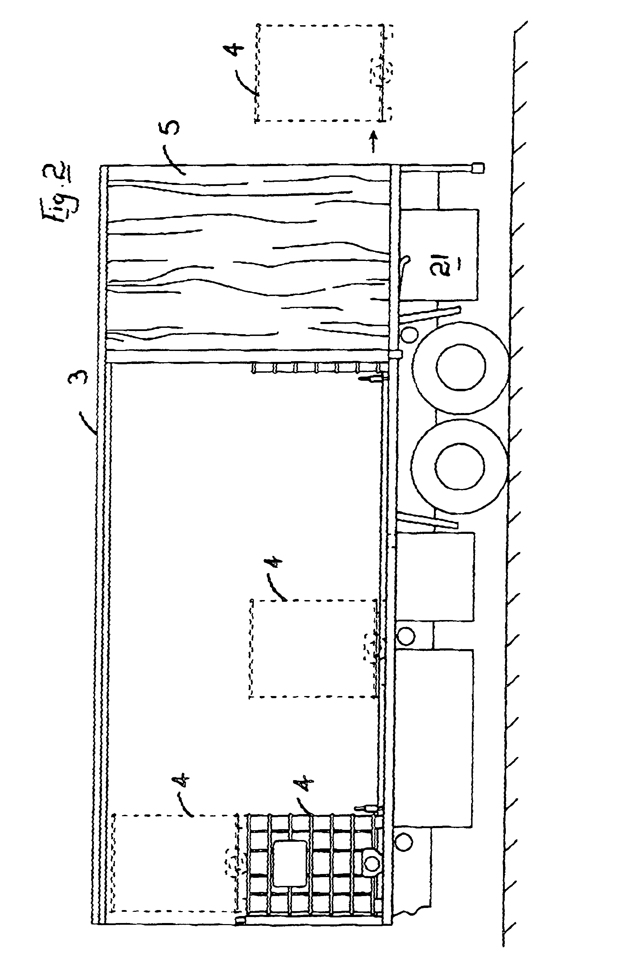

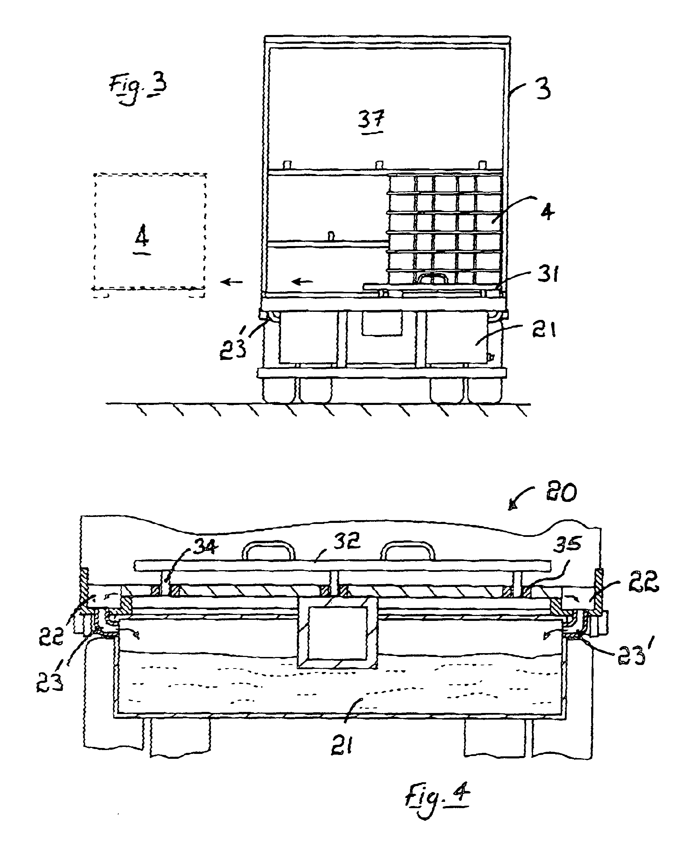

In use, and referring now in particular to Figs. 2 and 3 the IBC's 4 are loaded onto the trailer unit 3 from the sides having drawn back a retractable cover 5. The IBC's may also be loaded from the rear of the unit 3 by opening rear doors. Where height and weight restrictions allow it will be noted that the IBC's 4 can be loaded on top of each other as shown in interrupted lines on Fig. 2.

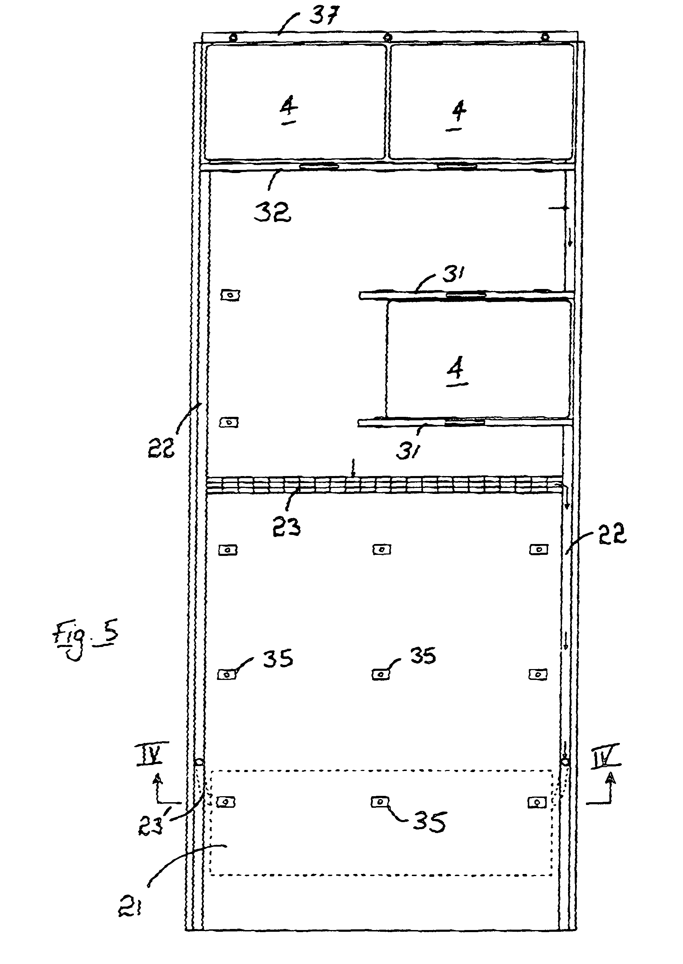

Referring now to Figs. 2 to 5 there is shown an oil recovery system forming part of the invention indicated generally by the reference numeral 20. The system 20 comprises a sump tank 21 and a delivery means provided in this case by two longitudinal side channels 22 and an interconnecting cross channel 23. At the end of the side channels 22 there are delivery pipes 23' connected to the sump tank 21.

In use, when a delivery hose is changed between IBC's 4 a small amount of oil is lost from the outlet or from the hose. This oil falls to the floor of the trailer 3. Movement of the trailer in transit or an angle on the floor of the trailer 3 delivers spilled oil to the channels 22, 23. This oil thus recovered is then directed along the channels to the delivery pipes 23 and into the sump 21. It is an important feature of the current invention that, in addition to collecting spilled oil the sump may also be used to recover oil which is flushed from a pumping system when changing oils. In the event that one of the IBC's 4 ruptures as a result of wear or following an accident, the sump 21 is sufficiently large to recover the entire contents. This represents a significant safety enhancement over previously known solutions. Additionally, the use of this sump allows salvaged oil to be returned to commercial use, typically as the lowest grade of lubrication oil because of the mixes that it contains. It will be understood that the cross channel 23 may also be fitted with a sump connection and that any or all of the channels may be so constructed as to define retaining walls for IBC's mounted on the vehicle 1.

According to another aspect of the invention, there is provided a securing system for detachably mounting an IBC 4 in position indicated generally by the reference numeral 30. The securing system 30 has a single securing bar 31 and a double securing bar 32. The single securing bar 31 has the same length dimension as a single IBC 4 and similarly, the double securing bar 32 has the same length dimension as two IBC's 4. Both of the securing bars 31, 32 have handles 33 and locking legs 34. The locking legs 34 are formed for engagement with a corresponding recess 35 in a floor 36 of the trailer 33.

In use, the IBC 4 is loaded onto the trailer 3 and the securing bar 31 is removed from a stowed position on a front face 37 of the trailer 3. The bar 31 is then positioned so that the locking legs 34 are positioned above corresponding recesses 35. The bar 31 is then lowered into position. The bar 31 prevents movement of an IBC 4 on the trailer 3 when not fully loaded. The operation of the double locking bar 32 is identical to that described with reference to the bar 31 in securing two IBC's 4 on the trailer 3.

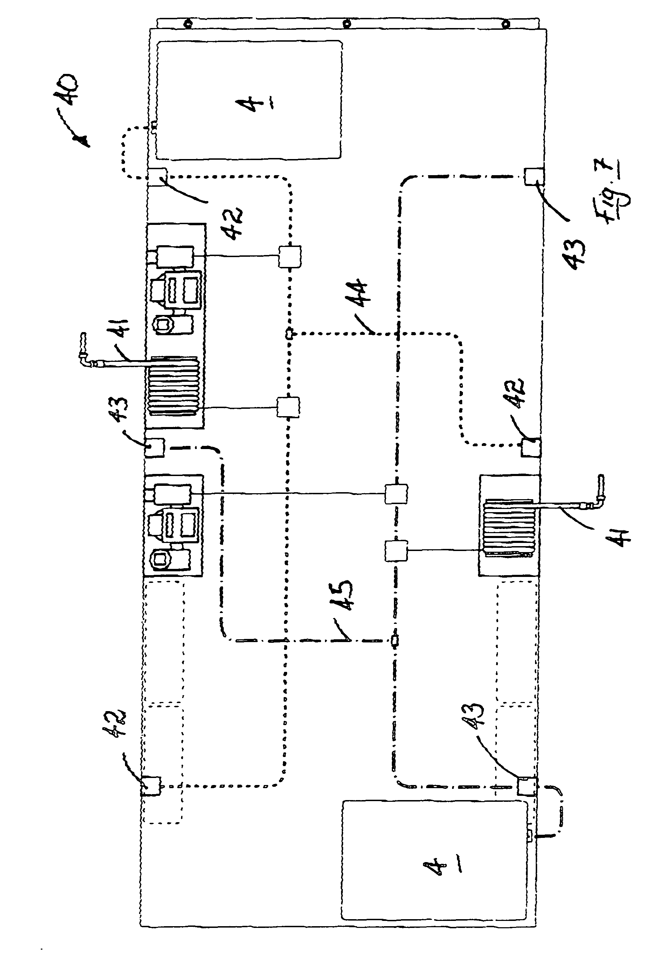

Referring now in particular to Fig. 7 there is illustrated an evacuation system indicated generally by the reference numeral 40 forming part of the current invention. The evacuation system 40 is used in pumping contents of the IBC's 4 for delivery to outlet pumps 41. There are two outlet pumps 41 to accommodate what are known in the industry as white oils and non-white oils. It is important when delivering oil to prevent cross contamination of these oils as white oils can easily be contaminated. The vehicle 1 has three white oil tapping points 42 and three coloured oil tapping points 43 disposed along the sides of the vehicle 1. The arrangement of tapping points in this way allows an operative ease of access to a given IBC thus obviating the necessity to carry a multiplicity connection pipes (not shown) and reducing potential for waste. By locating tapping points for the different coloured oils alternatively around the vehicle access to a white oil pumping circuit 44 and a coloured oil pumping circuit 45 is facilitated.

It will be understood that the term vehicle is taken to include lorries, trucks, tankers, rolling stock and any other form of vehicle capable of transporting and pumping as described.

It will further be understood that a vehicle formed in accordance with the invention represents a significant improvement over known solutions in that accidental damage results in a greatly reduced loss of liquid volume. This can be particularly important when high cost liquids are being transported or indeed where environmentally hazardous liquids are being distributed.

It will of course be understood that the invention is not limited to the specific details as herein described, which are given by way of example only, and that various alterations and modifications may be made, provided that they fall within the scope of the appended claims.

## Claims

1. A vehicle (1) for the distribution of bulk liquids, comprising means for releaseably engaging a plurality of storage containers (4) in which bulk liquids are held, the storage containers (4) being intermediate bulk carriers (IBC), the vehicle (1) further comprising an integrated evacuation system (40) for pumping a bulk liquid from said containers (4) on the vehicle for delivery to an outlet pump, **characterised in that** the evacuation system (40) has alternately white oil tapping (42) and coloured oil tapping points (43) disposed along and about the vehicle to allow operative case of access to a given container (4).

2. A vehicle (1) as claimed in Claim 1 incorporating an oil recovery system (20) comprising a sump tank (21) and a delivery means for directing liquid to the sump tank (21).

3. A vehicle (1) as claimed in Claim 2 wherein the delivery means includes a longitudinal side channel (22) on the vehicle (1).

4. A vebicle (1) as claimed in claim 2 wherein the delivery means includes a pair of spaced apart longitudinal side channels (22), each channel (22) extending along an exterior longitudinal surface of the vehicle (1).

5. A vehicle (1) as claimed in Claim 4 wherein the side channels (22) have an interconnecting cross channel (23).

6. A vehicle (1) as claimed in any of Claims 3 wherein the delivery means includes a detachably mounted flexible hose (23') connected between the side channel (22) and the sump tank (21).

7. A vehicle (1) as claimed in any of claims 2 to 6 wherein the sump tank (21) is dimensioned to have a greater volume than that of a storage container (4).

8. A vehicle (1) as claimed in claim 3 wherein the vehicle (1) includes a floor (36) on which the storage containers (4) are carried, the floor (36) being angled to facilitate direction of spilled oil to the longitudinal side channel (22).

9. A vehicle (1) as claimed in any preceding claim wherein the vehicle (1) includes a securing system for detachably mounting the storage containers (4) in position on the vehicle (1) having a securing bar (31) dimensioned to accommodate the storage container (4), the securing bar (31) having at least one locking leg (34) formed for engagement with a corresponding recess (35) on the vehicle (1).

## Patentansprüche

1. Ein Fahrzeug (1) für die Verteilung von flüssigen Massengütern, wobei das Fahrzeug Mittel zum lösbaren Eingriff mit einer Vielzahl von Speicherbehältern (4), in denen flüssige Massengüter enthalten sind, aufweist, wobei die Speicherbehälter (4) Zwischenmassenträger (IBC= intermediate bulk carrier) sind, wobei das Fahrzeug (1) ferner ein integriertes Entleerungssystem (40) aufweist zum Pumpen eines flüssigen Massenguts aus den Behältern (4) auf dem Fahrzeug zur Lieferung an eine Auslasspumpe, **dadurch gekennzeichnet, dass** das Entleerungssystem (40) abwechselnd Weißöl-Entnahmestellen (42) und Farböl-Entnahmestellen (43) besitzt, die entlang des Fahrzeugs und um das Fahrzeug herum angeordnet sind, um einen betriebsmäßigen Zugriff auf einen bestimmten Behälter (4) zu gestatten.

2. Fahrzeug (1) gemäß Anspruch 1, welches ein Ölrückgewinnungssystem (20) umfasst, das einen Sumpftank (21) und Liefermittel zum Leiten von Flüssigkeit in den Sumpftank (21) aufweist.

3. Fahrzeug (1) gemäß Anspruch 2, wobei die Liefermittel einen längsseitigen Kanal (22) auf dem Fahrzeug (1) umfassen.

4. Fahrzeug (1) gemäß Anspruch 2, wobei die Liefermittel ein Paar von beabstandeten längsseitigen Kanälen (22) umfasst, wobei jeder Kanal (22) sich entlang einer äußeren Längsoberfläche des Fahrzeugs (1) erstreckt.

5. Fahrzeug (1) gemäß Anspruch 4, wobei die Seitenkanäle (22) einen diese verbindenden Querkanal (23) aufweisen.

6. Fahrzeug (1) gemäß Anspruch 3, wobei die Liefermittel einen lösbar angebrachten flexiblen Schlauch (23') umfassen, welcher zwischen dem Seitenkanal (22) und dem Sumpftank (21) verbunden ist.

7. Fahrzeug (1) gemäß einem der Ansprüche 2 bis 6, wobei der Sumpftank (21) derart bemessen ist, dass er ein größeres Volumen besitzt als ein Speicherbehälter (4).

8. Fahrzeug (1) gemäß Anspruch 3, wobei das Fahrzeug (1) eine Ladefläche (36) umfasst, auf der die Speicherbehälter (4) getragen sind, wobei die Ladefläche (36) geneigt ist, um das Leiten von verschüttetem Öl zu dem längsseitigen Kanal (22) zu erleichtern.

9. Fahrzeug (1) gemäß einem der vorhergehenden Ansprüche, wobei das Fahrzeug (1) ein Befestigungssystem umfasst zum lösbaren Anbringen der Speicherbehälter (4) in ihrer Position auf dem Fahrzeug (1), wobei das Befestigungssystem einen Befestigungsbalken (31) besitzt, der so bemessen ist, dass er den Speicherbehälter (4) aufnimmt, wobei der Befestigungsbalken (31) mindestens einen Verriegelungsschenkel (34) besitzt, der zum Eingriff mit einer entsprechenden Ausnehmung (35) auf dem Fahrzeug (1) ausgebildet ist.

## Revendications

1. Véhicule (1) pour la distribution de liquides en vrac, comprenant des moyens pour engager de façon amovible une pluralité de conteneurs de stockage (4) dans lesquels sont contenus des liquides en vrac, les conteneurs de stockage (4) étant des dispositifs intermédiaires de transport en vrac (IBC), le véhicule (1) comprenant en outre un système d'évacuation intégré (40) pour pomper du liquide en vrac à partir desdits conteneurs (4) sur le véhicule pour fourniture à une pompe de sortie, **caractérisé en ce que** le système d'évacuation (40) comporte en alternance des points de prélèvement d'huiles ou de carburants clairs (42) et des points de prélèvement d'huiles ou de carburants colorés (43) disposés le long et autour du véhicule pour faciliter une opération d'accès à un conteneur donné (4).

2. Véhicule (1) selon la revendication 1, comprenant un système de récupération d'huile ou de carburant (20) comprenant un réservoir de dépôt (21) et des moyens de fourniture pour diriger un liquide vers le réservoir de dépôt (21).

3. Véhicule (1) selon la revendication 2, dans lequel les moyens de fourniture comprennent un canal latéral longitudinal (22) sur le véhicule (1).

4. Véhicule (1) selon la revendication 2, dans lequel les moyens de fourniture comprennent une paire de canaux latéraux longitudinaux espacés entre eux (22), chaque canal (22) s'étendant le long d'une surface longitudinale extérieure du véhicule (1).

5. Véhicule (1) selon la revendication 4, dans lequel les canaux latéraux (22) comportent un canal d'interconnexion croisé (23).

6. Véhicule (1) selon la revendication 3, dans lequel les moyens de fourniture comprennent un tuyau flexible monté de façon amovible (23') connecté entre le canal latéral (22) et le réservoir de dépôt (21).

7. Véhicule (1) selon l'une quelconque des revendications 2 à 6, dans lequel le réservoir de dépôt (21) est dimensionné de façon à avoir un volume supérieur à celui d'un conteneur de stockage (4).

8. Véhicule (1) selon la revendication 3, dans lequel le véhicule (1) comprend un plancher (36) sur lequel sont transportés les conteneurs de stockage (4), le plancher (36) étant agencé pour faciliter la direction d'huile ou de carburant renversé vers le canal latéral longitudinal (22).

9. Véhicule (1) selon l'une quelconque des revendications précédentes, dans lequel le véhicule (1) comprend un système de fixation pour monter de façon amovible les conteneurs de stockage (4) en position sur le véhicule (1), comportant une barre de fixation (31) dimensionnée pour s'adapter au conteneur de stockage (4), la barre de fixation (31) comportant au moins une jambe de verrouillage (34) formée pour s'enclencher avec un renfoncement (35) situé sur le véhicule (1).
